# DEMANDE DE BREVET EUROPEEN

(11) **EP 1 006 018 A1**
(43) Date de publication de la demande: **07.06.2000**
(21) Numéro de dépôt: 99402998.1
(22) Date de dépôt: 01.12.1999
(51) Int. Cl.: B60P 1/44

(54) **Hayon élévateur pour véhicule**

(30) Priorité: 01.12.1998 FR 9815119
(71) Demandeur: Compagnie Erhel Hydris, 21000 Dijon (FR)
(72) Inventeur: Lamort De Gail, Marc, 75016 Paris (FR)
(74) Mandataire: Dawidowicz, Armand

(57) **Abrégé**

L'invention concerne un hayon élévateur pour véhicule industriel ou commercial, comprenant un organe de levage (1) monté pivotant (3) sur une structure (2) liée au châssis du véhicule, une plate-forme (4) étant articulée (5) sur ledit organe de levage (1) à son extrémité-opposée à ladite structure (2), un vérin hydraulique de levage (6) assurant le pivotement de l'organe de levage et un vérin hydraulique d'inclinaison (10) assurant l'horizontalité de la plate-forme (4).

L'invention consiste en ce que le corps du vérin d'inclinaison (10) est articulé (11) sur l'organe de levage (1), l'extrémité de la tige (12) du vérin d'inclinaison (10) est articulée (13) sur la plate-forme (4) et les chambres des vérins de levage (6) et d'inclinaison (10) sont reliées hydrauliquement de manière à permettre, en position de montée-descente de la plate-forme (4), le passage de l'huile de l'une des chambres à l'autre chambre et le maintien de la plate-forme (4) en position horizontale.

Application aux hayons élévateurs pour véhicules industriels ou commerciaux.

## Description

La présente invention concerne un hayon élévateur pour véhicule industriel ou commercial, tel qu'un camion, une remorque ou une camionnette, ledit hayon comprenant un organe de levage, tel qu'un cadre de levage, monté pivotant sur une structure, telle qu'un tube porteur, liée au châssis du véhicule, une plate-forme étant articulée sur ledit organe de levage à son extrémité opposée à ladite structure, un vérin hydraulique de levage assurant le pivotement de l'organe de levage et un vérin hydraulique d'inclinaison assurant l'horizontalité de la plate-forme.

On connaît des hayons élévateurs du type précédent, dits à parallélogramme, dans lesquels le corps du vérin d'inclinaison est articulé sur la structure et sa tige est articulée à une extrémité d'une saillie de la plate-forme. La distance entre les points d'articulation de la plate-forme sur le cadre de levage et sur la tige du vérin d'inclinaison est égale à la distance entre les axes d'articulation de l'organe de levage et du corps du vérin d'inclinaison sur la structure. En conséquence, lorsqu'on maintient la longueur du vérin d'inclinaison à une valeur égale à la longueur de l'organe de levage, la plate-forme se déplace parallèle à elle-même au cours du pivotement de l'organe de levage.

Ces hayons élévateurs connus présentent divers inconvénients. Ils nécessitent en particulier que la plate-forme ait une hauteur de saillie suffisante pour assurer un déplacement sans risque de déformation du parallélogramme déformable constitué par l'organe de levage, la saillie de la plate-forme, le vérin d'inclinaison maintenu à longueur constante et les points d'articulation de l'organe de levage et du corps du vérin d'inclinaison. En outre, la structure liée au châssis porte les articulations de l'organe de levage, du vérin d'inclinaison et du vérin de levage, ce qui nécessite une structure de construction très résistante et relativement encombrante. De plus, le maintien à longueur constante du vérin d'inclinaison, pendant les opérations de montée et de descente de la plate-forme, est difficile à garantir de manière sûre.

En conséquence, la présente invention vise à pallier les inconvénients des hayons élévateurs à parallélogramme connus.

A cet effet, le hayon élévateur selon l'invention est caractérisé en ce que le corps du vérin d'inclinaison est articulé sur l'organe de levage, l'extrémité de la tige du vérin d'inclinaison est articulée sur la plate-forme et les chambres des vérins de levage et d'inclinaison sont reliées hydrauliquement de manière à permettre, en position de montée-descente de la plate-forme, le passage de l'huile de l'une des chambres à l'autre chambre et le maintien de la plate-forme en position horizontale.

Le hayon élévateur selon l'invention offre l'avantage important d'écarter de la structure liée au châssis le point d'articulation du corps du vérin d'inclinaison, ce qui favorise une réduction de l'encombrement, une augmentation de la rigidité de la liaison entre la plate-forme et l'organe de levage, ainsi qu'une sécurité de fonctionnement optimale due à l'étanchéité de la liaison hydraulique entre les chambres des deux vérins.

L'invention sera bien comprise à la lecture de la description suivante d'un exemple de réalisation, en référence au dessin annexé dans lequel:
la figure 1 est une vue schématique en élévation latérale du hayon en position haute de la plate-forme,
la figure 2 est analogue à la figure 1, pour une position moyenne de la plate-forme,
la figure 3 est analogue aux figures 1 et 2, la plate-forme étant en position basse.

Le hayon élévateur comprend un organe de levage 1, tel que par exemple un cadre ou une poutre de levage, articulé à son extrémité arrière ou intérieure sur un tube porteur 2 transversal relié au châssis du véhicule (non représenté). Le tube porteur 2 peut être monté coulissant longitudinalement, de manière connue en soi, pour permettre l'effacement du hayon sous le véhicule. Mais ce tube porteur 2 peut être fixe et l'organe de levage être déformable pour réduire sa longueur lors de l'effacement du hayon. L'axe d'articulation 3 de l'organe de levage 1 sur le tube porteur 2 est également transversal.

Une plate-forme 4 est articulée, autour d'un axe transversal 5, sur l'extrémité de l'organe de levage 1 opposée au tube porteur 2.

De manière connue, le corps d'un vérin hydraulique de levage 6 est articulé sur la structure 2, autour d'un axe transversal 7 du tube porteur 2, et l'extrémité de la tige 8 du vérin 6 est articulée, autour d'un axe transversal 9, sur l'organe de levage 1.

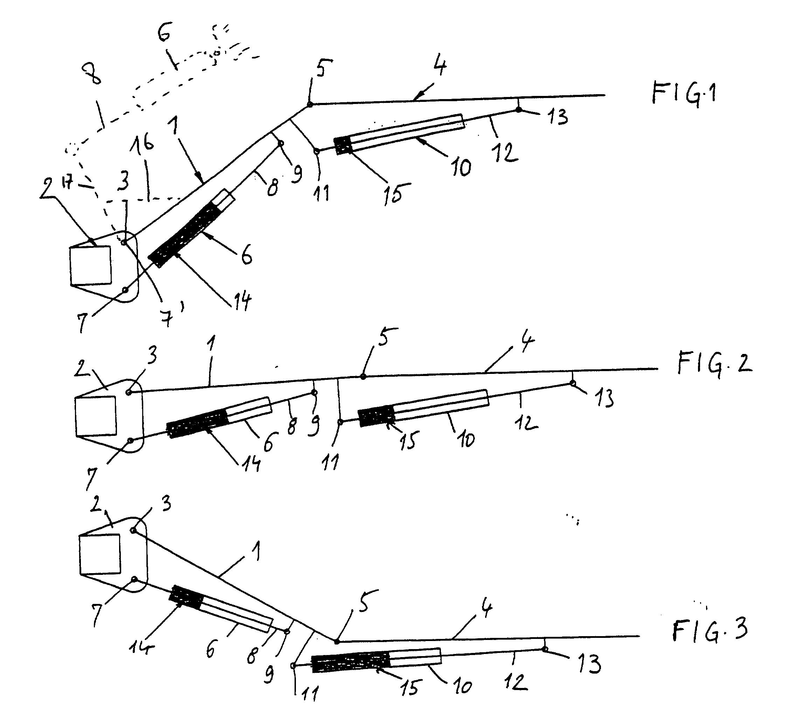

Selon une variante, représentée en pointillés à la figure 1, le vérin 6 est au-dessus de l'organe de levage 1, le corps du vérin 6 est relié au châssis du véhicule et sa tige 8 est articulée sur l'organe de levage 1 par l'intermédiaire d'un axe 17 articulé sur l'axe transversal 7' du tube porteur 2 et comportant un bras 16 de liaison avec l'organe de levage 1. Cette structure permet de laisser libre le dessous de l'organe de levage, en particulier pour prévoir des moyens de déplacement transversal de la plate-forme pour amener celle-ci sur un trottoir par exemple.

Conformément à l'invention, le corps d'un vérin hydraulique d'inclinaison 10 est articulé autour d'un axe transversal 11 de l'organe de levage 1 et l'extrémité de la tige 12 du vérin d'inclinaison 10 est articulée sur la plate-forme 4 autour d'un axe transversal 13. En outre, la chambre 14 du vérin de levage 6 et la chambre 15 du vérin d'inclinaison 10 sont reliées par une liaison hydraulique (non représentée) de telle sorte que, lors de la descente de la plate-forme, l'huile contenue dans la chambre 13 du vérin de levage 6 passe progressivement dans la chambre 15 du vérin d'inclinaison 10, ce qui maintient horizontale la plate-forme 4. Cette descente est illustrée par les figures 1 à 3 dans cet ordre.

La remontée de la plate-forme 4se fait par les étapes inverses des figures 3 à 1, l'huile de la chambre 15 du vérin d'inclinaison 10 passant progressivement dans la chambre 14 du vérin de levage 6, la plate-forme 4 étant toujours maintenue horizontale.

## Revendications

1. Hayon élévateur pour véhicule industriel ou commercial, tel qu'un camion, une remorque ou une camionnette, ledit hayon comprenant un organe de levage (1), tel qu'un cadre de levage, monté pivotant (3) sur une structure (2), telle qu'un tube porteur, liée au châssis du véhicule, une plate-forme (4) étant articulée (5) sur ledit organe de levage (1) à son extrémité opposée à ladite structure (2), un vérin hydraulique de levage (6) assurant le pivotement de l'organe de levage et un vérin hydraulique d'inclinaison (10) assurant l'horizontalité de la plate-forme (4),
caractérisé en ce que le corps du vérin d'inclinaison (10) est articulé (11) sur l'organe de levage (1), l'extrémité de la tige (12) du vérin d'inclinaison (10) est articulée (13) sur la plate-forme (4) et les chambres des vérins de levage (6) et d'inclinaison (10) sont reliées hydrauliquement de manière à permettre, en position de montée-descente de la plate-forme (4), le passage de l'huile de l'une des chambres à l'autre chambre et le maintien de la plate-forme (4) en position horizontale.

2. Hayon élévateur selon la revendication 1,
caractérisé en ce que la structure liée au châssis du véhicule, est constituée par un tube porteur (2) transversal.

3. Hayon élévateur selon la revendication 2,
caractérisé en ce que le tube porteur (2) est monté coulissant longitudinalement sur le châssis du véhicule.

4. Hayon élévateur selon la revendication 2,
caractérisé en ce que le tube porteur (2) est fixe par rapport au châssis du véhicule et l'organe de levage (1) est déformable.

5. Hayon élévateur selon l'une des revendications 1 à 4,
caractérisé en ce que le corps du vérin (6) est articulé (7) sur ladite structure (2) et la tige (8) est articulée (9) sur l'organe de levage (1).

6. Hayon élévateur selon l'une des revendications 1 à 4,
caractérisé en ce que le corps du vérin (6) est relié au châssis du véhicule et sa tige (8) est articulée sur l'organe de levage (1) par l'intermédiaire d'un axe (17) articulé sur l'axe transversal (7') du tube porteur (2) et comportant un bras (16) de liaison avec l'organe de levage (1).
